(19) Europäisches Patentamt
European Patent Office
Office européen des brevets

(11) **EP 4 741 769 A1**

(12) **EUROPEAN PATENT APPLICATION**

(43) Date of publication:
**13.05.2026 Bulletin 2026/20**

(21) Application number: **25211306.3**

(22) Date of filing: **27.10.2025**

(51) International Patent Classification (IPC):
**G01C 25/00** $^{(2006.01)}$ **G01P 21/00** $^{(2006.01)}$

(52) Cooperative Patent Classification (CPC):
**G01C 25/005; G01P 21/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.11.2024 JP 2024196055**

(71) Applicant: **Alps Alpine Co., Ltd.**
Ota-ku,
Tokyo 145-8501 (JP)

(72) Inventor: **Obara, Masanori**
Iwaki-city Fukushima (JP)

(74) Representative: **Schmitt-Nilson Schraud Waibel Wohlfrom**
**Patentanwälte Partnerschaft mbB**
**Pelkovenstraße 143**
**80992 München (DE)**

(54) **OFFSET ERROR CALCULATION FOR A THREE-AXIS ACCELERATION SENSOR**

(57) To provide an attitude estimation system for an automobile and an offset error calculation method for a three-axis acceleration sensor for correcting an error caused depending on the mounting attitude of an acceleration sensor with respect to an automobile, using a three-axis acceleration sensor, a Roll angle Roll_A and a Pitch angle Pitch_A are measured in a state where an automobile is parked with a forward orientation in a parking lot, where a Roll angle Roll_B and a Pitch angle Pitch_B are measured in a state where the automobile is parked with an opposite orientation in the parking lot, and the average of Roll_A and Roll_B is set as an offset error in the Roll direction, and the average of Pitch_A and Pitch_B is set as an offset error in the pitch direction.

FIG.3

CALIBRATION PROCESS

302 GUIDE TO PARK IN PARKING LOT WITH FORWARD ORIENTATION

304 HAS PARKING BEEN COMPLETED? n

306 MEASURE Roll_A AND Pitch_A — y

308 GUIDE TO PARK IN PARKING LOT WITH OPPOSITE ORIENTATION

310 HAS PARKING BEEN COMPLETED? n

312 MEASURE Roll_B AND Pitch_B — y

314 CALCULATE AVERAGE OF Roll_A AND Roll_B AS ROLL OFFSET

316 CALCULATE AVERAGE OF Pitch_A AND Pitch_B AS PITCH OFFSET

318 SET ROLL OFFSET AND PITCH OFFSET AS CORRECTION PARAMETERS

END

EP 4 741 769 A1

**Description**

The present application claims priority to Japanese Patent Application No. 2024-196055, filed November 8, 2024.

The present invention relates to an attitude estimation system for an automobile.

As a technique related to an attitude estimation system for estimating the attitude of an automobile, a technique known in a system for calculating the pitch angle of an automobile using an acceleration sensor determines the attitude of the acceleration sensor when mounted on the automobile (the mounting attitude, the attitude with respect to the automobile) such that the amount of azimuth change measured using a GPS receiver and the amount of azimuth change measured using a gyro sensor fixed on the same base as that on which the acceleration sensor is fixed will match, and corrects the pitch angle calculated using the acceleration sensor in accordance with the determined mounting attitude (for example, JP 2004-20207A) .

According to the above-described technique for calculating the mounting attitude of the acceleration sensor with respect to the automobile and correcting the pitch angle calculated using the acceleration sensor, the gyro sensor and the GPS receiver are required for the correction, and a relatively large amount of time and processing is required for calculating the mounting attitude.

Therefore, it is an object of the present invention to correct, with a simple configuration, an error caused depending on the mounting attitude of the acceleration sensor with respect to the automobile in the calculation of the attitude of the automobile using the acceleration sensor.

The present disclosure relates to an attitude estimation system for an automobile according to the appended claims. Embodiments are disclosed in the dependent claims.

According to an aspect, the present invention provides an attitude estimation system for an automobile, including:

a three-axis acceleration sensor fixed to an automobile;
a processor; and
a memory,
wherein the processor is configured to:

calculate a roll angle of the automobile, using the three-axis acceleration sensor;
set an offset error for roll angle measurement for the automobile using the three-axis acceleration sensor; and
correct the calculated roll angle of the automobile such that the offset error is canceled, and
wherein, when setting the offset error, the processor sets, as the offset error, an average of a first roll angle measured using the three-axis acceleration sensor in a state where the automobile is parked at a first location with a first orientation and a second roll angle measured using the three-axis acceleration sensor in a state where the automobile is parked at the first location with a second orientation opposite to the first orientation.

According to a further aspect, the present invention provides an attitude estimation system for an automobile, including:

a three-axis acceleration sensor fixed to an automobile;
a processor; and
a memory,
wherein the processor is configured to:

calculate a pitch angle of the automobile, using the three-axis acceleration sensor;
set an offset error for pitch angle measurement for the automobile using the three-axis acceleration sensor; and
correct the calculated pitch angle of the automobile such that the offset error is canceled, and
wherein, when setting the offset error, the processor sets, as the offset error, an average of a first pitch angle measured using the three-axis acceleration sensor in a state where the automobile is parked at a first location with a first orientation and a second pitch angle measured using the three-axis acceleration sensor in a state where the automobile is parked at the first location with a second orientation opposite to the first orientation.

According to a further aspect, the present invention provides an attitude estimation system for an automobile, including:

a three-axis acceleration sensor fixed to an automobile;
a processor; and

a memory,
wherein the processor is configured to:

calculate a roll angle and a pitch angle of the automobile, using the three-axis acceleration sensor;
set an offset error for roll angle measurement and an offset error for pitch angle measurement for the automobile using the three-axis acceleration sensor; and
correct the calculated roll angle of the automobile such that the offset error for the roll angle measurement is canceled, and correct the calculated pitch angle of the automobile such that the offset error for the pitch angle measurement is canceled, and
wherein, when setting the offset errors, the processor sets, as the offset error for the roll angle measurement, an average of a first roll angle measured using the three-axis acceleration sensor in a state where the automobile is parked at a first location with a first orientation and a second roll angle measured using the three-axis acceleration sensor in a state where the automobile is parked at the first location with a second orientation opposite to the first orientation, and sets, as the offset error for the pitch angle measurement, an average of a first pitch angle measured using the three-axis acceleration sensor in a state where the automobile is parked at the first location with the first orientation and a second pitch angle measured using the three-axis acceleration sensor in a state where the automobile is parked at the first location with the second orientation.

According to an embodiment, in the attitude estimation system, the processor may further be configured to: guide a driver of the automobile to park at the first location with the first orientation, and guide the driver to park at the first location with the second orientation, where the first location is a parking lot bounded by delimiting lines.

According to a further aspect, the present invention also provides an offset error calculation method for a three-axis acceleration sensor used in the attitude estimation system described above, the offset error calculation method including:

measuring an inclination angle with respect to a horizontal direction as a first inclination angle, using a three-axis acceleration sensor fixed to an automobile, in a state where the automobile is parked at a first location with a first orientation;
measuring an inclination angle with respect to the horizontal direction as a second inclination angle, using the three-axis acceleration sensor, in a state where the automobile is parked at the first location with a second orientation opposite to the first orientation; and
calculating an average of the first inclination angle and the second inclination angle, as an inclination angle offset error of the inclination angle measured by the three-axis acceleration sensor with respect to the horizontal direction of the automobile.

According to the attitude estimation system and the offset error calculation method described herein, a simple process only including performing measurement using the three-axis acceleration sensor in a state where the automobile is parked at the first location with the first orientation and in a state where the automobile is parked at the first location with the second orientation opposite to the first orientation enables correcting an error caused depending on the mounting attitude of the three-axis acceleration sensor with respect to the automobile in the calculation of the attitude of the automobile using the three-axis acceleration sensor, regardless of whether or not the first location is horizontal.

As described above, according to the present invention, it is possible to correct, with a simple configuration, an error caused depending on the mounting attitude of the acceleration sensor with respect to the automobile in the calculation of the attitude of the automobile using the acceleration sensor.

FIG. 1 is a diagram showing a configuration of an attitude estimation system according to an embodiment of the present invention;
FIG. 2A is a diagram showing a coordinate system used in an embodiment of the present invention;
FIG. 2B is a diagram showing a coordinate system used in an embodiment of the present invention;
FIG. 2C is a diagram showing a coordinate system used in an embodiment of the present invention;
FIG. 2D is a diagram showing a coordinate system used in an embodiment of the present invention;
FIG. 3 is a flowchart showing a calibration process according to an embodiment of the present invention;
FIG. 4A is a diagram showing a process example of a calibration process according to an embodiment of the present invention;
FIG. 4B is a diagram showing a process example of a calibration process according to an embodiment of the present invention;
FIG. 4C is a diagram showing a process example of a calibration process according to an embodiment of the present invention;

FIG. 4D is a diagram showing a process example of a calibration process according to an embodiment of the present invention;

FIG. 4E is a diagram showing a process example of a calibration process according to an embodiment of the present invention;

FIG. 4F is a diagram showing a process example of a calibration process according to an embodiment of the present invention; and

FIG. 4G is a diagram showing a process example of a calibration process according to an embodiment of the present invention.

Hereinafter, embodiments of the present invention will be described.

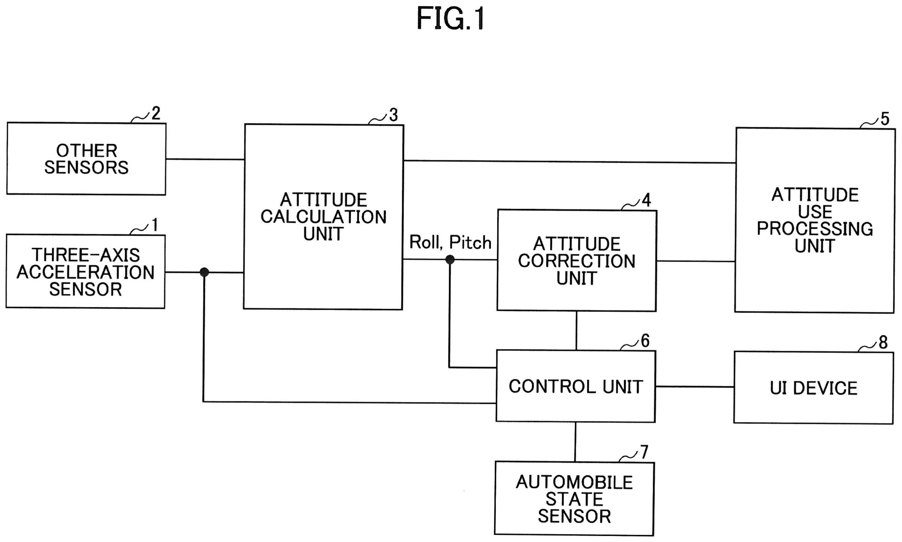

FIG. 1 shows a configuration of an attitude estimation system according to an embodiment.

The attitude estimation system is a system mounted on an automobile, and as shown in the drawing, includes a three-axis acceleration sensor 1, other sensors 2, such as an angular velocity sensor, a speed sensor, and the like, an attitude calculation unit 3, an attitude correction unit 4, an attitude use processing unit 5, a control unit 6, an automobile state sensor 7, such as an automobile speed sensor for detecting various states of the automobile and the like, and a UI device 8 for receiving an operation by a user and performing displaying output to the user.

The attitude calculation unit 3, the attitude correction unit 4, the attitude use processing unit 5, the control unit 6, and the UI device 8 are composed of an electronic circuit (including a processor), such as a Central Processing Unit (CPU), a Graphics Processing Unit (GPU), a Digital Signal Processor (DSP), a Field Programmable Gate Array (FPGA), an Application Specific Integrated Circuit (ASIC), and the like, and are configured to perform various processes described herein by executing instruction codes stored in a memory or by being designed as a circuit for a specific application.

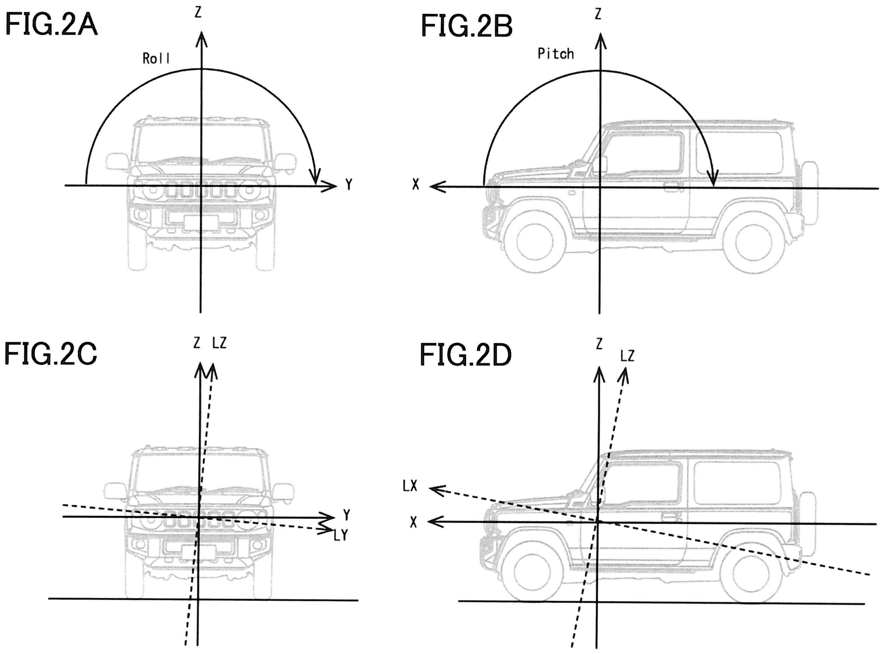

Here, as shown in FIGS. 2A and 2B, the attitude estimation system estimates a Roll angle that is an inclination angle of an automobile about the X axis and a Pitch angle that is an inclination angle of the automobile about the Y axis, where the vertical axis of the automobile is Z, the front-rear axis of the automobile is X, and the left-right axis of the automobile is Y.

The three-axis acceleration sensor 1 is an acceleration sensor based on orthogonal three axes LX-LY-LZ. As shown in FIGS. 2C and 2D, the LX-LY-LZ system, which is a local coordinate system fixed to the three-axis acceleration sensor 1, inclines with respect to the X-Y-Z system, which is a fixed coordinate system of the automobile, in accordance with the mounting angle of the three-axis acceleration sensor 1 with respect to the automobile (relative attitude with respect to the automobile).

Returning to FIG. 1, the attitude calculation unit 3 calculates the attitude of the automobile including the Roll angle and the Pitch angle of the automobile by using outputs from the three-axis acceleration sensor 1 and the other sensors 2. However, the attitude calculation unit 3 calculates the attitude of the automobile by using outputs from the three-axis acceleration sensor 1 on the assumption that the local system LX-LY-LZ of the three-axis acceleration sensor 1 coincides with the fixed system X-Y-Z of the automobile.

The attitude correction unit 4 corrects the Roll angle and the Pitch angle of the attitude of the automobile calculated by the attitude calculation unit 3 by using a correction parameter set by the control unit 6 such that any inclination of the local system LX-LY-LZ of the three-axis acceleration sensor 1 with respect to the fixed system X-Y-Z of the automobile is reflected.

The attitude use processing unit 5 performs processing involving use of the Roll angle and the Pitch angle corrected by the attitude correction unit 4 and another attitude calculated by the attitude calculation unit 3.

Here, the attitude use processing unit 5 may be, for example, a processing unit or the like that causes the attitude estimation system to function as an inclination angle meter of the automobile by displaying the Roll angle and the Pitch angle of the automobile.

The control unit 6 performs a calibration process when it is instructed to perform calibration of the mounting angle of the three-axis acceleration sensor 1 via the UI device 8 from a user, a maintenance worker, and the like, and sets a correction parameter to be used by the attitude correction unit 4 for correction.

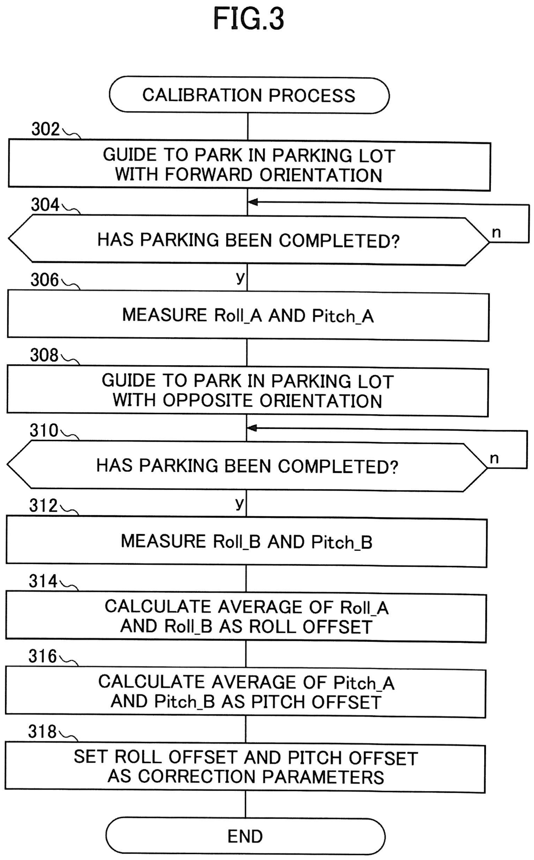

FIG. 3 shows a procedure of a calibration process.

As shown in the flowchart, in this process, the control unit 6 first guides the driver to park in the parking lot with forward orientation (step 302). Here, parking with the forward orientation is defined as parking by shifting into reverse, and parking with an opposite orientation is defined as parking by shifting into drive. However, conversely, parking with the forward orientation may be defined as parking by shifting into drive, and parking with the opposite orientation may be defined as parking by shifting into reverse.

This guide is performed by, for example, a displaying output of a message such as "Please park in the parking lot by shifting into reverse" via the UI device 8.

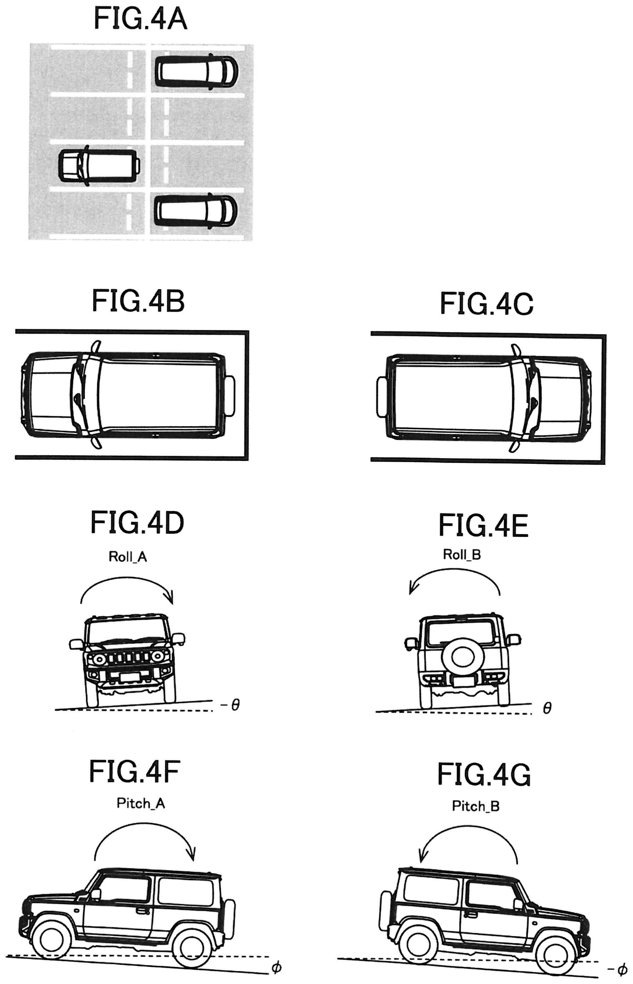

Note that, in the present embodiment, as shown in FIG. 4A, the parking lot is intended to be a lot for automobile parking, which is bounded on at least the left side and the right side by white lines and the like.

Returning to FIG. 3, it is determined whether the driver has completed parking in the parking lot with forward orientation (step 304). This determination can be performed, for example, by receiving an operation indicating the completion of parking from the driver via the UI device 8. However, the determination may be performed by taking into consideration whether the automobile state sensor 7 has detected an automobile speed of 0 or whether the three-axis acceleration sensor 1 has not detected an acceleration fluctuation that is equal to or greater than a predetermined level.

Then, for example, when parking in the parking lot with forward orientation is completed as shown in FIG. 4B, the Roll angle and the Pitch angle calculated by the attitude calculation unit 3 are measured as Roll_A, and Pitch_A (step 306).

However, the three-axis acceleration sensor 1 may directly measure a Roll angle that is the inclination angle of the three-axis acceleration sensor 1 about the LX axis as Roll_A, and a Pitch angle that is the inclination angle of the three-axis acceleration sensor 1 about the LY axis as Pitch_A.

Here, on the assumption that the acceleration in the LX direction detected by the three-axis acceleration sensor 1 is "ax", the acceleration in the LY direction detected likewise is "ay", and the acceleration in the LZ direction detected likewise is "az", the Roll angle that is the inclination angle of the three-axis acceleration sensor 1 about the LX axis and the Pitch angle that is the inclination angle of the three-axis acceleration sensor 1 about the LY axis when the automobile is stationary are expressed as follows:

$$\texttt{Roll angle = arctan(ax/ay)}$$

$$\texttt{Pitch angle = arctan(-az/\{ax}^2\texttt{+ay}^2\texttt{\}}^{1/2}\texttt{)}$$

Next, the driver is guided to park with the opposite orientation in the parking lot (step 308).

This guide is performed by a displaying output of a message such as "This time, please park in the same parking lot by shifting into drive" via the UI device 8.

Next, it is determined whether the driver has completed parking with the opposite orientation in the parking lot (step 310), and when the driver has completed parking with the opposite orientation in the parking lot as shown in, for example, FIG. 4C, the Roll angle and the Pitch angle calculated by the attitude calculation unit 3 are measured as Roll_B and Pitch_B (step 312).

However, the three-axis acceleration sensor 1 may directly measure the Roll angle of the three-axis acceleration sensor 1 about the LX axis as Roll_B, and the Pitch angle of the three-axis acceleration sensor 1 about the LY axis as Pitch_B.

Then, the average of Roll_A and Roll_B, (Roll_A+Roll_B)/2, is set as a Roll offset (step 314), and the average of Pitch_A and Pitch_B, (Pitch_A+Pitch_B)/2, is set as a Pitch offset (step 316).

Then, the Roll offset and the Pitch offset are set as correction parameters in the attitude correction unit 4 (step 318), and the process is ended.

Here, Roll_A and Roll_B each represent the sum of an offset error, which is the deviation of the Roll angle calculated by the attitude calculation unit 3 from the actual Roll angle of the automobile, and the inclination angle of the road surface in the Roll direction.

Since the inclination in one parking lot can be regarded as being uniform, the inclination of the road surface in the Roll direction when the automobile is parked in the same parking lot with an opposite orientation is one that is reversed from positive to negative or vice versa, as shown in FIGS. 4D and 4E.

Therefore, in the case of FIGS. 4D and 4E, on the assumption that the inclination of the road surface in the Roll direction in FIG. 4D is -θ and the Roll angle offset error of the attitude calculation unit 3 is dR, Roll_A is expressed as -θ +dR and Roll_B is expressed as θ+dR, and their average is (-θ+dR+θ+dR)/2=2dR/2=dR. Therefore, the Roll angle offset error dR of the attitude calculation unit 3 can be obtained even when the road surface is not horizontal.

Similarly, Pitch_A and Pitch_B each represent the sum of an offset error, which is the deviation of the Pitch angle calculated by the attitude calculation unit 3 from the actual pitch angle of the automobile, and the inclination angle of the road surface in the Pitch direction.

Since the inclination in one parking lot can be regarded as being uniform, the inclination of the road surface in the Pitch direction when the automobile is parked in the same parking lot with an opposite orientation is one that is reversed from positive to negative or vice versa, as shown in FIGS. 4F and 4G.

In the case of FIGS. 4F and 4G, on the assumption that the inclination of the road surface in the Pitch direction in FIG. 4F is φ and the Pitch angle offset error of the attitude calculation unit 3 is dP, Pitch_A is expressed as φ+dP and Pitch_B is expressed as -φ+dP, and their average is {φ+dP+(-φ +dP)}/2=2dP/2=dP. Therefore, the Pitch angle offset error dP of the attitude calculation unit 3 can be obtained even when the road surface is not horizontal.

The Roll angle offset error thus obtained is referred to as the Roll offset, and the Pitch angle offset error is referred to as the Pitch offset, and both are set as correction parameters in the attitude correction unit 4.

Note that the Roll angle offset error and the Pitch angle offset error are errors of the attitude calculation unit 3 in calculating the Roll angle and the Pitch angle, and are represented by the deviation (inclination) of the local system LX-LY-LZ of the three-axis acceleration sensor 1 with respect to the fixed system X-Y-Z of the automobile.

The attitude correction unit 4 in which the correction parameters are set in this way corrects the Roll angle and the Pitch angle of the automobile calculated by the attitude calculation unit 3 by subtracting the Roll offset set as the correction parameter from the Roll angle of the automobile calculated by the attitude calculation unit 3 to cancel the Roll angle offset error, and subtracting the Pitch offset set as the correction parameter from the Pitch angle of the automobile calculated by the attitude calculation unit 3 to cancel the Pitch angle offset error, and outputs the corrected values to the attitude use processing unit 5.

For example, when the Roll offset is 1 degree and the Pitch offset is -20 degrees, and the Roll angle and the Pitch angle included in the attitude of the automobile calculated by the attitude calculation unit 3 are 3 degrees and -18 degrees, respectively, the Roll angle is corrected to 3-1 = 2 degrees and the Pitch angle is corrected to -18-(-20) = 2 degrees.

As described above, a simple process only including performing measurement using the three-axis acceleration sensor 1 in the same parking lot in a state where the automobile is parked with forward orientation or in a state where the automobile is parked with the opposite orientation enables correcting an error caused depending on the mounting attitude of the three-axis acceleration sensor 1 with respect to the automobile in the calculation of the attitude of the automobile using the three-axis acceleration sensor 1, regardless of whether or not the parking lot is horizontal.

In the foregoing description, the Roll offset and the Pitch offset are obtained by parking an automobile in the same parking lot with forward orientation and the opposite orientation. However, the location where the automobile is parked with the forward orientation and the opposite orientation does not need to be a parking lot, and the location where the automobile is parked with forward orientation and the opposite orientation may be any same location where the inclination is approximately uniform.

**Claims**

1.  An attitude estimation system, comprising:

    a three-axis acceleration sensor fixed to an automobile;
    a processor; and
    a memory,
    wherein the processor is configured to:

    calculate a roll angle of the automobile, using the three-axis acceleration sensor;
    set an offset error for roll angle measurement for the automobile using the three-axis acceleration sensor; and
    correct the calculated roll angle of the automobile such that the offset error is canceled, and
    wherein, when setting the offset error, the processor is configured to set, as the offset error, an average of a first roll angle measured using the three-axis acceleration sensor in a state where the automobile is parked at a first location with a first orientation and a second roll angle measured using the three-axis acceleration sensor in a state where the automobile is parked at the first location with a second orientation opposite to the first orientation.

2.  An attitude estimation system, comprising:

    a three-axis acceleration sensor fixed to an automobile;
    a processor; and
    a memory,
    wherein the processor is configured to:

    calculate a pitch angle of the automobile, using the three-axis acceleration sensor;
    set an offset error for pitch angle measurement for the automobile using the three-axis acceleration sensor; and
    correct the calculated pitch angle of the automobile such that the offset error is canceled, and
    wherein, when setting the offset error, the processor is configured to set, as the offset error, an average of a first pitch angle measured using the three-axis acceleration sensor in a state where the automobile is parked at a first location with a first orientation and a second pitch angle measured using the three-axis acceleration sensor in a state where the automobile is parked at the first location with a second orientation opposite to the first orientation.

3. An attitude estimation system, comprising:

a three-axis acceleration sensor fixed to an automobile;
a processor; and
a memory,
wherein the processor is configured to:

calculate a roll angle and a pitch angle of the automobile, using the three-axis acceleration sensor;
set an offset error for roll angle measurement and an offset error for pitch angle measurement for the automobile using the three-axis acceleration sensor; and
correct the calculated roll angle of the automobile such that the offset error for the roll angle measurement is canceled, and correct the calculated pitch angle of the automobile such that the offset error for the pitch angle measurement is canceled, and
wherein, when setting the offset errors, the processor is configured to set, as the offset error for the roll angle measurement, an average of a first roll angle measured using the three-axis acceleration sensor in a state where the automobile is parked at a first location with a first orientation and a second roll angle measured using the three-axis acceleration sensor in a state where the automobile is parked at the first location with a second orientation opposite to the first orientation, and to set, as the offset error for the pitch angle measurement, an average of a first pitch angle measured using the three-axis acceleration sensor in a state where the automobile is parked at the first location with the first orientation and a second pitch angle measured using the three-axis acceleration sensor in a state where the automobile is parked at the first location with the second orientation.

4. The attitude estimation system according to one of claims 1 to 3,
wherein the processor is further configured to: guide a driver of the automobile to park at the first location with the first orientation, and guide the driver to park at the first location with the second orientation, where the first location is a parking lot bounded by delimiting lines.

5. An offset error calculation method for a three-axis acceleration sensor used in the attitude estimation system of one of claims 1 to 4, the offset error calculation method comprising:

measuring an inclination angle with respect to a horizontal direction as a first inclination angle, using a three-axis acceleration sensor fixed to the automobile, in a state where the automobile is parked at a first location with a first orientation;
measuring an inclination angle with respect to the horizontal direction as a second inclination angle, using the three-axis acceleration sensor, in a state where the automobile is parked at the first location with a second orientation opposite to the first orientation; and
calculating an average of the first inclination angle and the second inclination angle, as an inclination angle offset error of the inclination angle measured by the three-axis acceleration sensor with respect to the horizontal direction of the automobile.

# FIG.1

OTHER SENSORS 2

THREE-AXIS ACCELERATION SENSOR 1

ATTITUDE CALCULATION UNIT 3

Roll, Pitch

ATTITUDE CORRECTION UNIT 4

ATTITUDE USE PROCESSING UNIT 5

CONTROL UNIT 6

UI DEVICE 8

AUTOMOBILE STATE SENSOR 7

EP 4 741 769 A1

FIG.2A

FIG.2B

FIG.2C

FIG.2D

# FIG.3

```
        ( CALIBRATION PROCESS )
                    |
302 ┌───────────────────────────────┐
    │  GUIDE TO PARK IN PARKING LOT  │
    │     WITH FORWARD ORIENTATION   │
    └───────────────────────────────┘
                    |
304 <   HAS PARKING BEEN COMPLETED?   > ── n
                    | y
306 ┌───────────────────────────────┐
    │     MEASURE Roll_A AND Pitch_A │
    └───────────────────────────────┘
                    |
308 ┌───────────────────────────────┐
    │  GUIDE TO PARK IN PARKING LOT  │
    │    WITH OPPOSITE ORIENTATION   │
    └───────────────────────────────┘
                    |
310 <   HAS PARKING BEEN COMPLETED?   > ── n
                    | y
312 ┌───────────────────────────────┐
    │     MEASURE Roll_B AND Pitch_B │
    └───────────────────────────────┘
                    |
314 ┌───────────────────────────────┐
    │    CALCULATE AVERAGE OF Roll_A │
    │    AND Roll_B AS ROLL OFFSET   │
    └───────────────────────────────┘
                    |
316 ┌───────────────────────────────┐
    │   CALCULATE AVERAGE OF Pitch_A │
    │   AND Pitch_B AS PITCH OFFSET  │
    └───────────────────────────────┘
                    |
318 ┌───────────────────────────────┐
    │  SET ROLL OFFSET AND PITCH OFFSET │
    │    AS CORRECTION PARAMETERS    │
    └───────────────────────────────┘
                    |
               (    END    )
```

# FIG.4A

# FIG.4B

# FIG.4C

# FIG.4D

Roll_A

$-\theta$

# FIG.4E

Roll_B

$\theta$

# FIG.4F

Pitch_A

$\phi$

# FIG.4G

Pitch_B

$-\phi$

Europäisches
Patentamt

European
Patent Office

Office européen
des brevets

## EUROPEAN SEARCH REPORT

**Application Number**

EP 25 21 1306

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 171 134 A1 (AGJUNCTION LLC [US]) 24 May 2017 (2017-05-24) * paragraphs [0003] - [0021]; claims 1-3; figure 3A * ----- | 1-5 | INV. G01C25/00 G01P21/00 |
| | | | **TECHNICAL FIELDS SEARCHED (IPC)** |
| | | | G01C G01P |

The present search report has been drawn up for all claims

| Place of search | Date of completion of the search | Examiner |
|---|---|---|
| The Hague | 24 March 2026 | Tabellion, Marc |

EPO FORM 1503 03.82 (P04C01)

## ANNEX TO THE EUROPEAN SEARCH REPORT
## ON EUROPEAN PATENT APPLICATION NO.

EP 25 21 1306

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2026

| Patent document cited in search report | | Publication date | Patent family member(s) | | Publication date |
|---|---|---|---|---|---|
| EP 3171134 | A1 | 24-05-2017 | AU | 2016259362 A1 | 08-06-2017 |
| | | | CA | 2948611 A1 | 19-05-2017 |
| | | | EP | 3171134 A1 | 24-05-2017 |
| | | | US | 2017146667 A1 | 25-05-2017 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024196055 A
- JP 2004020207 A